# EUROPEAN PATENT SPECIFICATION

(11) **EP 2 942 726 B1**
(45) Date of publication and mention of the grant of the patent: **11.09.2019**
(21) Application number: 14305657.0
(22) Date of filing: 05.05.2014
(51) Int. Cl.: G06F 21/10, G06F 21/12, H04L 29/06

(54) **METHOD AND DEVICE FOR CONTROLLING THE USE OF APPLICATIONS BY ITEMS OF COMMUNICATION EQUIPMENT CONNECTED TO A PRIVATE NETWORK**
VERFAHREN UND VORRICHTUNG ZUR STEUERUNG DER VERWENDUNG VON ANWENDUNGEN DURCH ELEMENTE EINER MIT EINEM PRIVATEN NETZWERK VERBUNDENEN KOMMUNIKATIONSAUSRÜSTUNG
PROCÉDÉ ET DISPOSITIF PERMETTANT DE CONTRÔLER L'UTILISATION D'APPLICATIONS PAR DES ÉLÉMENTS D'ÉQUIPEMENT DE COMMUNICATION CONNECTÉS À UN RÉSEAU PRIVÉ

(43) Date of publication of application: 11.11.2015
(73) Proprietor: Alcatel Lucent, 91620 Nozay (FR)
(72) Inventor: Bletterie, Philippe, 92707 Colombes (FR); Abou-Chakra, Rabih, 92707 Colombes (FR)
(74) Representative: Novagraaf Technologies

(56) References cited:
- US-A- 5 204 897
- US-A1- 2014 032 759

## Description

### FIELD OF THE INVENTION

The present invention relates to private networks to which items of communication equipment of authorized users have access, and more precisely to the control of the use in such private networks of applications running in such communications equipments.

### BACKGROUND OF THE INVENTION

Private networks, and notably enterprise networks, allow personal items of communication equipment of authorized users to access them via secure connections (such as local networks, VPNs or SBCs ("Session Border Controllers")). This so-called BYOD (Bring your own device) phenomenon has generated a side effect known as BYOA (Bring your own applications). Thus, personal items of communication equipment may be carrying several types of application (but also software), and notably personal or enterprise software that are authorized to be used without restriction in the considered private network, or personal or enterprise softwares that are not authorized to be used in the considered private network, or else personal softwares that need a specific enterprise license to be used in the enterprise network (for legal requirement), for a matter of price and/or right to use.

The issue is consequently to ensure that only authorized softwares, with the right level of enterprise licenses if applicable, are used when personal items of communication equipment are connected to an enterprise network.

Currently, the proposed solution for such an issue consists in performing a control at the network layer, for instance by blocking some ports that are used by unauthorized applications. But this solution is not satisfactory because many applications go through "standard" ports, such as 8080, that are used by the http protocol.

It could be also possible to deploy a control client software in each user communication equipment to forbid the installation of some unauthorized applications. However, such a solution appears to be very limited as a lot of users could reject a software deployment provided for blocking the installation of some applications they need for their personal usage. Moreover, such a solution does not address the concern of softwares that are installed in items of user communication equipment under a personal license and which need an upgrade to an enterprise license when they are used in an enterprise (or private network) context. Relevant prior-art is also known from US 5204897A.

### Summary of the Invention

An aim of this invention is to provide a secured and compliant use of personal device software when the device is connected on the enterprise network, and notably to allow a control of the use of applications (or softwares), that are installed in items of user communication equipment, only when the latter are connected to a private network.

To this effect, according to the invention only authorized software is enabled, software which needs an enterprise licence to be used in the enterprise context requiring to be associated with a valid enterprise licence.

More particularly, the invention provides a method according to claim 1.

According to a first embodiment, the authorization server indicates to the user communication equipment each one of its applications that requires a licence upgrade to be used in the private network, then the user communication equipment provides an identifier to an auxiliary licence server of the private network and requests a licence upgrade for each indicated application, then, when it is possible, the auxiliary licence server organizes booking of a licence upgrade for each indicated application with the licence server and associates the provided identifier with each booked licence upgrade, then the auxiliary licence server indicates to the user communication equipment each indicated application for which a booked licence upgrade has been associated with the provided identifier, after which the use is authorized by the user communication equipment of each indicated application with a booked licence upgrade associated with the provided identifier.

According to one embodiment, when there is no available licence upgrade for an indicated application, the auxiliary licence server is informed of this unavailability by the licence server, then the auxiliary licence server indicates to the user communication equipment that it is not authorized to use the indicated application in the private network.

According to another embodiment, the method further comprises a final step during which, when the user communication equipment disconnects from the private network, the use is authorized of any application by the user communication equipment, and the auxiliary licence server indicates to the licence server that each licence upgrade associated with the identifier is no longer used.

The invention provides a computer program product comprising a set of instructions arranged, when it is executed by processing means, for performing the method according to the invention to control the use of applications running on items of communication equipment, belonging to users having access to a private network comprising a licence server arranged for managing the licences of applications that are authorized to be used by the items of user communication equipment, when they are connected to the private network.

The invention also provides a computer program product according to claim 5 and a device according to claim 6.

According to one embodiment, the device is arranged, when it is informed by the authorization server that the user communication equipment comprises at least one application requiring a licence upgrade to be used in the private network, for providing an identifier to an auxiliary licence server of the private network and for requesting a licence upgrade for each application that requires it, then, when it is informed by the auxiliary licence server that it has organized booking of a licence upgrade for the application with the licence server and associated the provided identifier with the booked licence upgrade, for authorizing the use by the user communication equipment of each application with a booked licence upgrade associated with the provided identifier.

According to another embodiment, the device is arranged for authorizing the use of any application by the user communication equipment when the user communication equipment disconnects from the private network.

The invention also provides a system according to claim 9. The system comprises an auxiliary server and a device according to the invention.

According to an embodiment, the auxiliary licence server is arranged, when it is informed of unavailability of a licence upgrade for an indicated application by the licence server, for indicating to the user communication equipment that it is not authorized to use the indicated application in the private network.

According to an embodiment, the auxiliary licence server is further arranged, when the user communication equipment disconnects from the private network, for indicating to the licence server that each licence upgrade associated with an identifier is no longer used.

### BRIEF DESCRIPTION OF THE DRAWINGS

Other features and advantages of the invention will become apparent on reading the detailed specifications hereafterin conjunction with the appended drawings, wherein:
- figure 1 schematically and functionally illustrates an example of a private network to which items of communication equipment, comprising a device according to the invention, have access via a communication network comprising an authorization server, an auxiliairy licence server and a licence server,
- figure 2 schematically illustrates a first example of a sequence diagram defining sub steps of a main step of a method according to the invention, when licence upgrades are available for personal applications of a user communication equipment,
- figure 3 schematically illustrates a second example of a sequence diagram defining sub steps of the main step of the method according to the invention, when licence upgrades are not available for personal applications of a user communication equipment, and
- figure 4 schematically illustrates a third example of a sequence diagram defining sub steps of a final step of the method according to the invention, when an item of user communication equipment disconnects from a private network.

### DETAILED DESCRIPTION OF PREFERRED EMBODIMENTS

The invention provides, notably, a method and an associated device 6 provided for controlling the use of applications running on items of communication equipment 2ⱼ, belonging to users having access to a private network 1, when they (2ⱼ) are connected to the latter (1).

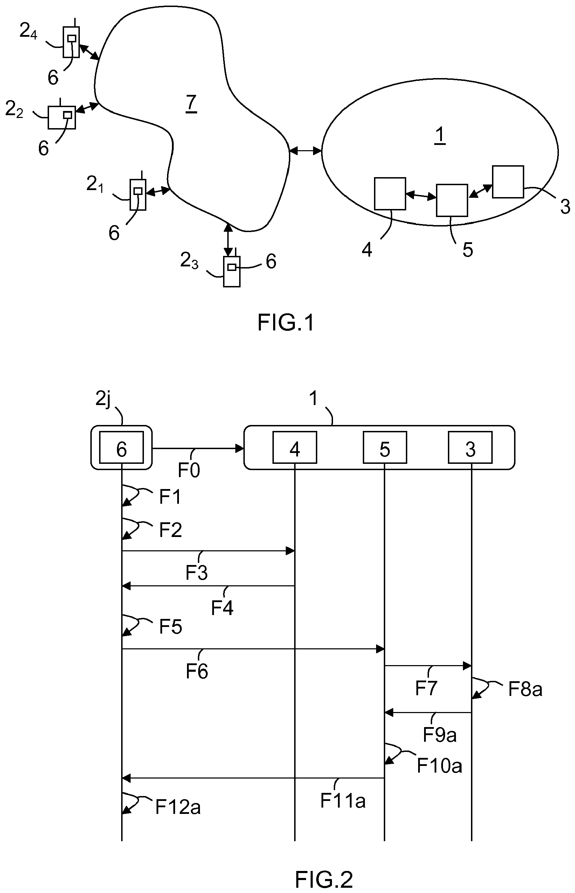

A non-limiting example of a private network 1 accessible via a communication network 7 is illustrated in figure 1. In this example, the items of communication equipment 2ⱼ, belonging to users having access to the private network 1, may establish a connection with the latter (1) by the communication network 7.

In the following description it will be considered that the private network 1 belongs to an enterprise, and that the communication network 7 offers at least a wireless access. So, the items of user communication equipment 2ⱼ (here j = 1 to 4) may be, for instance, smartphones, tablets, or laptops. But, in the case where the communication network 7 offers at least a wired access, the items of user communication equipment 2ⱼ may be computers. Moreover, the items of user communication equipment 2ⱼ could have a direct access to the private network 1.

In order for the invention to be implemented, the private network 1 must comprise at least a licence server 3 and an authorization server 4.

The licence server 3 is arranged for managing the pool of the licences of applications that are authorized to be used by the items of user communication equipment 2ⱼ according to the private network (or enterprise) software rules.

The authorization server 4 stores and manages a list of applications (or softwares) that the items of user communication equipment 2ⱼ are authorized to use (or install) when they are connected to the private network 1. For this, it is arranged, when a request containing all the applications running in an item of user communication equipment 2ⱼ is received, to determine the ones that are authorized to be used in the private network 1 without any restriction, the ones that are not authorized to be used in the private network 1 whatever the restriction, and the ones that are authorized to be used in the private network 1 (according to its software rules) if an enterprise license upgrade is booked at the licence server 3.

The method according to the invention comprises a step that is performed when an item of user communication equipment 2ⱼ has established a connection with the private network 1 (this preliminary sub step is illustrated by the arrow F0 in figure 2).

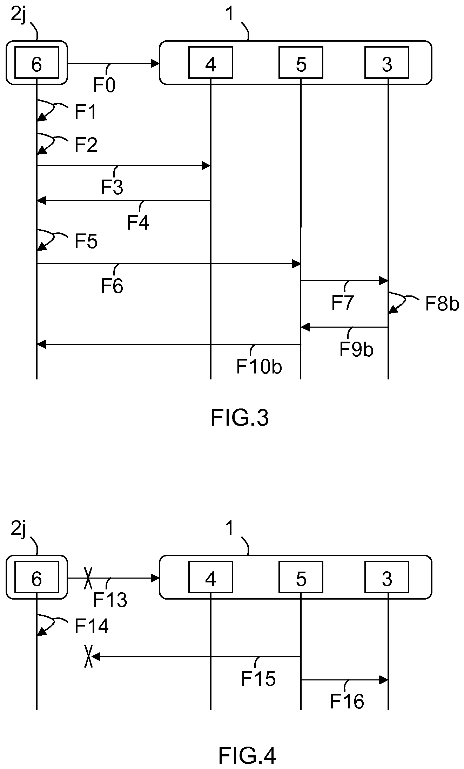

During this method step, once the connection of an item of user communication equipment 2ⱼ has been detected (sub step illustrated by the arrow F1 in figures 2 and 3), one starts by forbidding the use of each application of this user communication equipment 2ⱼ (this sub step is illustrated by the arrow F2 in figures 2 and 3). Then, one determines in the authorization server 4 the applications of this user communication equipment 2ⱼ that are authorized to be used by the private network 1 (this sub step is illustrated by the arrows F3 and F4 in figures 2 and 3). This determination is triggered in the authorization server 4 when the latter (4) receives a request containing identifiers representative of the user communication equipment applications (arrow F3 in figures 2 and 3). Then, the use is authorized by this user communication equipment 2ⱼ of the applications authorized by the authorization server 4 after a comparison with its stored list (this sub step is illustrated by the arrow F5 in figures 2 and 3).

The method step may be implemented at least partly by a device 6 that may be installed in each user communication equipment 2ⱼ. Each device 6 may be made of software modules (and in this case it constitutes a computer program product comprising a set of instructions arranged for performing at least partly the method step when it is executed by processing means of an item of user communication equipment 2ⱼ). But this is not mandatory. Indeed, it may be made of a combination of electronic circuit(s) (or hardware module(s)) and software modules. Moreover, a part of a computer program product comprising a set of instructions arranged for performing at least partly the method step (and notably an application comparison upon reception of a request generated by the device 6 of an item of user communication equipment 2ⱼ) when it is executed by processing means of the authorization server 4.

To detect that user communication equipment 2ⱼ is connected to the private network 1, it may, after having been notified of this connection (for instance by means of an Operating System notification), test the access to the authorization server 4. If this access is successful, this means that the user communication equipment 2ⱼ is effectively connected to the private network 1.

For instance, during the method step the authorization server 4 may indicate to a requesting user communication equipment 2ⱼ (and more precisely to its device 6) each one of its applications that requires a licence upgrade to be used in the private network 1 (arrow F4 in figures 2 and 3). Then this user communication equipment 2ⱼ (and more precisely its device 6) provides an identifier (that is representative of itself) to an auxiliary licence server 5 of the private network 1 and requests a licence upgrade for each indicated application (this sub step is illustrated by the arrow F6 in figures 2 and 3).

This auxiliary licence server 5 is arranged for managing live booking of license upgrades (with the license server 3) when an item of user communication equipment 2ⱼ connects to the private network 1 and has an application (or software) that needs a temporary license upgrade.

Then, when it is possible (case illustrated in figure 2), this auxiliary licence server 5 organizes booking of a licence upgrade for each indicated application with the licence server 3 (this sub step is illustrated by the arrows F7, F8a and F9a in figure 2), and associates the provided identifier with each booked licence upgrade (this sub step is illustrated by the arrow F10a in figure 2). More precisely, in sub step F7 the auxiliary licence server 5 requests a licence upgrade for at least one indicated application, in sub step 8a the licence server 3 books the available application licence upgrade, and in sub step 9a the licence server 3 informs the auxiliary licence server 5 of the booking of a licence upgrade for the indicated application(s). Then, the auxiliary licence server 5 indicates to the user communication equipment 2ⱼ each indicated application for which a booked licence upgrade has been associated with the provided identifier (this sub step is illustrated by the arrow F11a in figure 2). Then, one (the device 6 of the requesting user communication equipment 2ⱼ) authorizes the use by this user communication equipment 2ⱼ of each indicated application with a booked licence upgrade associated with the provided identifier (this sub step is illustrated by the arrow F12a in figure 2).

In an alternative embodiment, instead of booking the license upgrade of an indicated application just after the detection of the connection of an item of user communication equipment 2ⱼ to the private network 1, this license upgrade could be booked only when this user communication equipment 2ⱼ uses this indicated application in order to optimize license upgrade availability.

When there is no available licence upgrade for an indicated application (case illustrated in figure 3), the auxiliary licence server 5 may be informed of this unavailability by the licence server 3 (this sub step is illustrated by the arrows F8b and F9b in figure 3). More precisely, in sub step 8b the licence server 3 determines that there is no available licence upgrade for an indicated application, and in sub step 9b the licence server 3 informs the auxiliary licence server 5 of the unavailability of a licence upgrade for the indicated application. Then this auxiliary licence server 5 may indicate to the requesting user communication equipment 2ⱼ (and more precisely to its device 6) that it is not authorized to use this indicated application in the private network 1 (this sub step is illustrated by the arrow F10b in figure 3).

The method according to the invention may further comprise a final step that is implemented by the device 6 of a requesting user communication equipment 2ⱼ when the latter (2ⱼ) disconnects from the private network 1 (this sub step is illustrated by the arrow F13 in figure 4). In this final method step, once the disconnection of an item of user communication equipment 2ⱼ has been detected (sub step illustrated by the arrow F13 in figure 4), one (the device 6 of the requesting user communication equipment 2ⱼ) authorizes the use of any application by this user communication equipment 2ⱼ (sub step illustrated by the arrow F14 in figure 4), and the auxiliary licence server 5 indicates to the licence server 3 that each licence upgrade associated with the identifier designating this requesting user communication equipment 2ⱼ is no longer used (sub step illustrated by the arrows F15 and F16 in figure 4). More precisely, in sub step F15 the auxiliary licence server 5 may trigger a "keep alive" timeout before freeing the license upgrade associated to an indicated application of the disconnected user communication equipment 2ⱼ, and in sub step F16 the auxiliary licence server 5 may request from the licence server 3 that it frees this license upgrade (so, this license upgrade goes back in the pool of available license).

It is important to note that a device 6 may work "silently" (i.e. in an invisible manner) or may generate real time information (such as notification to be displayed by the screen of its user communication equipment 2ⱼ) to inform the user about authorized software and unauthorized software, possibly with a reason (unavailability of upgrade license, or forbidden linked to enterprise software policy, or else inaccessibility of the auxiliary license server 5).

It is also important to note that if the version of an indicated application (i.e. requesting a licence upgrade) is not aligned with the one managed by the enterprise (or private network 1) and covered by a license upgrade, a device 6 may manage installation of another instance of this indicated application aligned with the enterprise software policy in its user communication equipment 2ⱼ. In such a case, the device 6 may also manage launching of the enterprise instance of the indicated application when the user communication equipment 2ⱼ calls this indicated application to use it in the private network 1.

The invention proposes a real global approach which fits in with private network software security rules and with software regulation, whatever the way users manage their own items of communication equipment and their personal applications.

The invention is not limited to the embodiments of method, device, servers and computer program product described above, only as examples, but it encompasses all alternative embodiments which may be considered by one skilled in the art within the scope of the claims hereafter.

## Claims

1. A method for controlling the use of applications running on items of communication equipment (2ⱼ), belonging to users having access to a private network (1) comprising a licence server (3) arranged for managing the licences of applications that are authorized to be used by said items of user communication equipment (2ⱼ), when they are connected to said private network (1), said method comprising a step comprising,
- upon detection that an item of user communication equipment (2ⱼ) has established a connection with said private network (1), forbidding the use of each application of this user communication equipment (2ⱼ);
- after the use of each application of this user communication equipment is forbidden, triggering a determination in an authorization server (4) of said private network (1) of the applications of said user communication equipment (2ⱼ) that are authorized to be used by the latter (1);
- after determination of the applications of said user communication equipment (2ⱼ) that are authorized to be used, authorizing the use by said user communication equipment (2ⱼ) of the applications authorized by said authorization server (4).

2. Method according to claim 1, wherein during said step:
said authorization server (4) indicates to said user communication equipment (2ⱼ) each one of its applications that requires a licence upgrade to be used in said private network (1),
then said user communication equipment (2ⱼ) provides an identifier to an auxiliary licence server (5) of said private network (1) and requests a licence upgrade for each indicated application,
then, when it is possible, said auxiliary licence server (5) organizes booking of a licence upgrade for each indicated application with said licence server (3) and associates said provided identifier with each booked licence upgrade, then said auxiliary licence server (5) indicates to said user communication equipment (2ⱼ) each indicated application for which a booked licence upgrade has been associated with said provided identifier, after which the use is authorized by said user communication equipment (2ⱼ) of each indicated application with a booked licence upgrade associated with said provided identifier.

3. Method according to claim 2, wherein during said step, when there is no available licence upgrade for an indicated application, said auxiliary licence server (5) is informed of this unavailability by said licence server (3), then said auxiliary licence server (5) indicates to said user communication equipment (2j) that it is not authorized to use said indicated application in said private network (1).

4. Method according to one of claims 1 to 3, wherein it further comprises a final step during which, when said user communication equipment (2ⱼ) disconnects from said private network (1), the use is authorized of any application by said user communication equipment (2ⱼ), and said auxiliary licence server (5) indicates to said licence server (3) that each licence upgrade associated with said identifier is no longer used.

5. A computer program product comprising a set of instructions arranged, when it is executed by processing means, for performing the method according to one of claims 1 to 4 to control the use of applications running on items of communication equipment (2ⱼ), belonging to users having access to a private network (1) comprising a licence server (3) arranged for managing the licences of applications that are authorized to be used by said items of user communication equipment (2ⱼ), when they are connected to said private network (1).

6. Device (6) for controlling the use of applications running on a user communication equipment (2j), said user communication equipment (2j) belonging to a user having access to a private network (1), wherein the device is arranged,
- upon detection that said user communication equipment (2ⱼ) has established a connection with said private network (1), for forbidding the use of each application of this user communication equipment (2ⱼ),
- after the use of each application of this user communication equipment is forbidden, triggering a determination in an authorization server (4) of said private network (1) of the applications of said user communication equipment (2ⱼ) that are authorized to be used by the latter (1),
- after determination of the applications of said user communication equipment (2ⱼ) that are authorized to be used, for authorizing the use by said user communication equipment (2ⱼ) of the applications authorized by said authorization server (4).

7. Device according to claim 6, wherein the device is arranged,
- when it is informed by said authorization server (4) that said user communication equipment (2ⱼ) comprises at least one application requiring a licence upgrade to be used in said private network (1), for providing an identifier to an auxiliary licence server (5) of said private network (1) and for requesting a licence upgrade for each application that requires it,
- then, when it is informed by said auxiliary licence server (5) that it has organized booking of a licence upgrade for said application with a licence server (3) of said private network (1) arranged for managing the licences of applications that are authorized to be used by said user communication equipment (2ⱼ) when said user communication equipment (2ⱼ) is connected to said private network (1) and associated said provided identifier with said booked licence upgrade, for authorizing the use by said user communication equipment (2ⱼ) of each application with a booked licence upgrade associated with said provided identifier.

8. Device according to one of claims 6 and 7, wherein it is arranged for authorizing the use of any application by said user communication equipment (2ⱼ) when said user communication equipment (2ⱼ) disconnects from said private network (1).

9. A system comprising a device according to any of claims 6 to 8 and an auxiliary licence server (5) for said private network (1), said auxiliary licence server (5) being arranged,
- when an item of user communication equipment (2ⱼ) has established a connection with said private network (1), and has provided an identifier and requested a licence upgrade for at least one indicated application, for organizing, when it is possible, booking of a licence upgrade for each indicated application with said licence server (3) and for associating said provided identifier with each booked licence upgrade,
- then for indicating to said user communication equipment (2ⱼ) each indicated application for which a booked licence upgrade has been associated with said provided identifier, so that it is authorized to use it.

10. System according to claim 9, wherein the auxiliary licence server (5) is arranged, when it is informed of unavailability of a licence upgrade for an indicated application by said licence server (3), for indicating to said user communication equipment (2ⱼ) that it is not authorized to use said indicated application in said private network (1).

11. System according to one of claims 9 and 10, wherein the auxiliary licence server (5) is further arranged, when said user communication equipment (2ⱼ) disconnects from said private network (1), for indicating to said licence server (3) that each licence upgrade associated with an identifier is no longer used.

## Patentansprüche

1. Verfahren zum Steuern der Verwendung von Anwendungen, die auf Elementen von Kommunikationseinrichtungen (2ⱼ) ablaufen, die Benutzern gehören, die einen Zugang zu einem privaten Netzwerk (1) haben, das einen Lizenzserver (3) umfasst, der geeignet ist, um die Lizenzen von Anwendungen zu erwalten, die dazu autorisiert sind, um von den Elementen der Benutzerkommunikationseinrichtungen (2ⱼ) verwendet zu werden, wenn diese mit dem privaten Netzwerk (1) verbunden sind, wobei das Verfahren einen Schritt umfasst, der umfasst,
- nach dem Erkennen, dass ein Element der Benutzerkommunikationseinrichtungen (2ⱼ) eine Verbindung mit dem privaten Netzwerk (1) hergestellt hat, Verbieten der Verwendung von allen Anwendungen durch diese Benutzerkommunikationseinrichtungen (2ⱼ);
- nachdem die Verwendung aller Anwendungen durch diese Benutzerkommunikationseinrichtungen verboten wurde, Auslösen einer Ermittlung in einem Autorisierungsserver (4) des privaten Netzwerks (1) der Anwendungen der Benutzerkommunikationseinrichtungen (2ⱼ), die dazu autorisiert sind, um von Letzteren (1) verwendet zu werden;
- nach der Ermittlung der Anwendungen der Benutzerkommunikationseinrichtungen (2ⱼ), die autorisiert sind, um verwendet zu werden, Autorisieren der Verwendung durch die Benutzerkommunikationseinrichtungen (2ⱼ) der Anwendungen, die durch den Autorisierungsserver (4) autorisiert wurden.

2. Verfahren nach Anspruch 1, wobei während des Schritts:
der Autorisierungsserver (4) der Benutzerkommunikationseinrichtungen (2ⱼ) jede seiner Anwendungen anzeigt, die eine Lizenzaktualisierung benötigen, um in dem privaten Netzwerk (1) verwendet zu werden,
die Benutzerkommunikationseinrichtungen (2ⱼ) danach einem Zusatzlizenzserver (5) des privaten Netzwerks (1) eine Kennung bereitstellen und die Lizenzaktualisierung für jede angezeigte Anwendung anfordern,
der Zusatzlizenzserver (5) danach, wenn es möglich ist, ein Buchen einer Lizenzaktualisierung für jede angezeigte Anwendung bei dem Lizenzserver (3) organisiert und die bereitgestellte Kennung jeder gebuchten Lizenzaktualisierung zuordnet, wobei der Zusatzlizenzserver (5) danach den Benutzerkommunikationseinrichtungen (2ⱼ) alle angezeigten Anwendungen anzeigt, für die eine gebuchte Lizenzaktualisierung der bereitgestellten Kennung zugeordnet wurde, wobei anschließend die Verwendung durch die Benutzerkommunikationseinrichtungen (2ⱼ) für jede angezeigte Anwendung mit einer gebuchten Lizenzaktualisierung autorisiert wird, die der bereitgestellten Kennung zugeordnet ist.

3. Verfahren nach Anspruch 2, wobei während des Schritts, wenn für eine angezeigte Anwendung keine Lizenzaktualisierung zur Verfügung steht, der Zusatzlizenzserver (5) von dem Lizenzserver (3) über die Nichtverfügbarkeit informiert wird, und der Zusatzlizenzserver (5) danach den Benutzerkommunikationseinrichtungen (2ⱼ) anzeigt, dass sie nicht dazu autorisiert sind, die angezeigte Anwendung in dem privaten Netzwerk (1) zu verwenden.

4. Verfahren nach einem der Ansprüche 1 bis 3, wobei es außerdem einen abschließenden Schritt umfasst, während dem, wenn die Benutzerkommunikationseinrichtungen (2ⱼ) von dem privaten Netzwerk (1) getrennt werden, die Verwendung von allen Anwendungen durch die Benutzerkommunikationseinrichtungen (2ⱼ) autorisiert wird, und der Zusatzlizenzserver (5) dem Lizenzserver (3) anzeigt, dass alle Lizenzaktualisierungen, die der Kennung zugeordnet sind, nicht mehr verwendet werden.

5. Computerprogrammprodukt, das eine Befehlssatz umfasst, der geeignet ist, wenn er von einem Verarbeitungselement ausgeführt wird, zum Ausführen des Verfahrens nach einem der Ansprüche 1 bis 4, um die Verwendung von Anwendungen zu steuern, die auf Elementen von Kommunikationseinrichtungen (2ⱼ) ablaufen, die Benutzern gehören, die einen Zugang zu einem privaten Netzwerk (1) haben, das einen Lizenzserver (3) umfasst, der geeignet ist zum Verwalten der Lizenzen von Anwendungen, die dazu autorisiert sind, um von den Elementen der Benutzerkommunikationseinrichtungen (2ⱼ) verwendet zu werden, wenn diese mit dem privaten Netzwerk (1) verbunden sind.

6. Vorrichtung (6) zum Steuern der Verwendung von Anwendungen, die auf Kommunikationseinrichtungen (2ⱼ) ablaufen, wobei die Kommunikationseinrichtungen (2ⱼ) einem Benutzer gehören, der einen Zugang zu einem privaten Netzwerk (1) hat, wobei die Vorrichtung geeignet ist:
- nach dem Erkennen, dass die Benutzerkommunikationseinrichtungen (2ⱼ) eine Verbindung mit dem privaten Netzwerk (1) hergestellt haben, zum Verbieten der Verwendung von allen Anwendungen durch diese Benutzerkommunikationseinrichtungen (2ⱼ),
- nachdem die Verwendung aller Anwendungen durch diese Benutzerkommunikationseinrichtungen verboten wurde, zum Auslösen einer Ermittlung in einem Autorisierungsserver (4) des privaten Netzwerks (1) der Anwendungen der Benutzerkommunikationseinrichtungen (2ⱼ), die dazu autorisiert sind, um von Letzteren (1) verwendet zu werden,
- nach der Ermittlung der Anwendungen der Benutzerkommunikationseinrichtungen (2ⱼ), die autorisiert sind, um verwendet zu werden, zum Autorisieren der Verwendung durch die Benutzerkommunikationseinrichtungen (2ⱼ) der Anwendungen, die durch den Autorisierungsserver (4) autorisiert wurden.

7. Vorrichtung nach Anspruch 6, wobei die Vorrichtung geeignet ist:
- wenn sie von dem Autorisierungsserver (4) informiert wird, dass die Benutzerkommunikationseinrichtungen (2ⱼ) mindestens eine Anwendung umfassen, die eine Lizenzaktualisierung benötigt, um in dem privaten Netzwerk (1) verwendet zu werden, zum Bereitstellen einer Kennung für einen Zusatzlizenzserver (5) des privaten Netzwerks (1) und zum Anfordern einer Lizenzaktualisierung für jede Anwendung, die eine solche benötigt,
- danach, wenn sie von dem Zusatzlizenzserver (5) informiert wird, dass er ein Buchen einer Lizenzaktualisierung für die Anwendung bei dem Lizenzserver (3) des privaten Netzwerks (1) organisiert, der dazu geeignet ist, die Lizenzen der Anwendungen zu verwalten, die dazu autorisiert sind, um von den Benutzerkommunikationseinrichtungen (2ⱼ) verwendet zu werden, wenn die Benutzerkommunikationseinrichtungen (2ⱼ) mit dem privaten Netzwerk (1) verbunden sind, und die bereitgestellte Kennung der gebuchten Lizenzaktualisierung zugeordnet wird, zum Autorisieren der Verwendung durch die Benutzerkommunikationseinrichtungen (2ⱼ) aller Anwendungen mit einer gebuchten Lizenzaktualisierung, die der bereitgestellten Kennung zugeordnet ist.

8. Vorrichtung nach einem der Ansprüche 6 und 7, wobei sie geeignet ist zum Autorisieren der Verwendung aller Anwendungen durch die Benutzerkommunikationseinrichtungen (2ⱼ), wenn die Benutzerkommunikationseinrichtungen (2ⱼ) von dem privaten Netzwerk (1) getrennt werden.

9. System, das eine Vorrichtung nach einem der Ansprüche 6 bis 8 und einen Zusatzlizenzserver (5) für das private Netzwerk (1) umfasst, wobei der Zusatzlizenzserver (5) geeignet ist,
- wenn ein Element der Benutzerkommunikationseinrichtungen (2ⱼ) eine Verbindung mit dem privaten Netzwerk (1) hergestellt hat, und eine Kennung bereitgestellt hat und eine Lizenzaktualisierung für mindestens eine angezeigte Anwendung angefordert hat, zum Organisieren, wenn es möglich ist, eines Buchens einer Lizenzaktualisierung für jede angezeigte Anwendung bei dem Lizenzserver (3) und zum Zuordnen der bereitgestellten Kennung zu jeder gebuchten Lizenzaktualisierung,
- danach zum Anzeigen für die Benutzerkommunikationseinrichtungen (2ⱼ) von allen angezeigten Anwendungen, für die eine gebuchte Lizenzaktualisierung der bereitgestellten Kennung zugeordnet ist, sodass sie autorisiert ist, um verwendet zu werden.

10. System nach Anspruch 9, wobei der Zusatzlizenzserver (5) geeignet ist, wenn er von dem Lizenzserver (3) über die Nichtverfügbarkeit einer Lizenzaktualisierung für eine angezeigte Anwendung informiert wird, zum Anzeigen für die Benutzerkommunikationseinrichtungen (2ⱼ), dass sie nicht dazu autorisiert sind, die angezeigte Anwendung in dem privaten Netzwerk (1) zu verwenden.

11. System nach einem der Ansprüche 9 und 10, wobei der Zusatzlizenzserver (5) außerdem geeignet ist, wenn die Benutzerkommunikationseinrichtungen (2ⱼ) von dem privaten Netzwerk (1) getrennt werden, zum Anzeigen für den Lizenzserver (3), dass alle Lizenzaktualisierungen, die der Kennung zugeordnet sind, nicht mehr verwendet werden.

## Revendications

1. Procédé pour contrôler l'utilisation d'applications fonctionnant sur des éléments d'équipement de communication (2j) appartenant à des utilisateurs ayant accès à un réseau privé (1) comprenant un serveur de licences (3) agencé pour gérer les licences d'applications qui sont autorisées à être utilisées par lesdits éléments d'équipement de communication utilisateur (2j), lorsqu'ils sont connectés audit réseau privé (1), ledit procédé comprenant les étapes suivantes :
- lors de la détection qu'un élément d'équipement de communication utilisateur (2j) a établi une connexion avec ledit réseau privé (1), interdire l'utilisation de chaque application de cet équipement de communication utilisateur (2j) ;
- après que l'utilisation de chaque application de cet équipement de communication utilisateur a été interdite, déclencher une détermination dans un serveur d'autorisation (4) dudit réseau privé (1) des applications dudit équipement de communication utilisateur (2j) qui sont autorisées à être utilisées par ce dernier (1) ;
- après détermination des applications dudit équipement de communication utilisateur (2j) qui sont autorisées à être utilisées, autoriser l'utilisation par ledit équipement de communication utilisateur (2j) des applications autorisées par ledit serveur d'autorisation (4).

2. Procédé selon la revendication 1, dans lequel, au cours de ladite étape :
ledit serveur d'autorisation (4) indique audit équipement de communication utilisateur (2j) chacune de ses applications qui nécessite une mise à niveau de licence pour être utilisée dans ledit réseau privé (1), ensuite, ledit équipement de communication utilisateur (2j) fournit un identifiant à un serveur de licences auxiliaire (5) dudit réseau privé (1) et demande une mise à niveau de licence pour chaque application indiquée,
ensuite, lorsque cela est possible, ledit serveur de licences auxiliaire (5) organise la réservation d'une mise à niveau de licence pour chaque application indiquée avec ledit serveur de licences (3), et associe ledit identifiant fourni avec chaque mise à niveau de licence réservée, puis ledit serveur de licences auxiliaire (5) indique audit équipement de communication utilisateur (2j) chaque application indiquée pour laquelle une mise à niveau de licence réservée a été associée audit identifiant fourni, après laquelle l'utilisation est autorisée par ledit équipement de communication utilisateur (2j) de chaque application indiquée avec une mise à niveau de licence réservée associée audit identifiant fourni.

3. Procédé selon la revendication 2, dans lequel, au cours de ladite étape, lorsqu'il n'y a pas de mise à niveau de licence disponible pour une application indiquée, ledit serveur de licences auxiliaire (5) est informé de son indisponibilité par ledit serveur de licences (3), puis ledit serveur de licences auxiliaire (5) indique audit équipement de communication utilisateur (2j) qu'il n'est pas autorisé à utiliser ladite application indiquée dans ledit réseau privé (1) .

4. Procédé selon l'une des revendications 1 à 3, lequel comprend en outre une étape finale au cours de laquelle, lorsque ledit équipement de communication utilisateur (2j) se déconnecte dudit réseau privé (1), l'utilisation est autorisée pour toute application par ledit équipement de communication utilisateur (2j), et ledit serveur de licences auxiliaire (5) indique audit serveur de licences (3) que chaque mise à niveau de licence associée audit identifiant n'est plus utilisée.

5. Produit programme informatique comprenant un ensemble d'instructions agencées, lorsqu'il est exécuté par des moyens de traitement, pour exécuter le procédé selon l'une des revendications 1 à 4 pour contrôler l'utilisation d'applications fonctionnant sur des éléments d'équipement de communication (2j) appartenant à des utilisateurs ayant accès à un réseau privé (1) comprenant un serveur de licences (3) agencé pour gérer les licences des applications qui sont autorisées à être utilisées par lesdits éléments d'équipement de communication utilisateur (2j) lorsque ceux-ci sont connectés audit réseau privé (1).

6. Dispositif (6) pour contrôler l'utilisation d'applications fonctionnant sur un équipement de communication utilisateur (2j), ledit équipement de communication utilisateur (2j) appartenant à un utilisateur ayant accès à un réseau privé (1), où le dispositif est agencé :
- lors de la détection que ledit équipement de communication utilisateur (2j) a établi une connexion avec ledit réseau privé (1), pour interdire l'utilisation de chaque application de cet équipement de communication utilisateur (2j),
- après que l'utilisation de chaque application de cet équipement de communication utilisateur a été interdite, pour déclencher une détermination dans un serveur d'autorisation (4) dudit réseau privé (1) des applications dudit équipement de communication utilisateur (2j) qui sont autorisées à être utilisées par ce dernier (1),
- après détermination des applications dudit équipement de communication utilisateur (2j) qui sont autorisées à être utilisées, pour autoriser l'utilisation par ledit équipement de communication utilisateur (2j) des applications autorisées par ledit serveur d'autorisation (4).

7. Dispositif selon la revendication 6, où le dispositif est agencé :
- lorsqu'il est informé par ledit serveur d'autorisation (4) que ledit équipement de communication utilisateur (2j) comprend au moins une application nécessitant une mise à niveau de licence à utiliser dans ledit réseau privé (1), pour fournir un identifiant à un serveur de licences auxiliaire (5) dudit réseau privé (1) et pour demander une mise à niveau de licence pour chaque application qui le requiert,
- ensuite, lorsqu'il est informé par ledit serveur de licences auxiliaire (5) qu'il a organisé la réservation d'une mise à niveau de licence pour ladite application avec un serveur de licences (3) dudit réseau privé (1) agencé pour gérer les licences des applications qui sont autorisées à être utilisées par ledit équipement de communication utilisateur (2j) lorsque ledit équipement de communication utilisateur (2j) est connecté audit réseau privé (1) et associé ledit identifiant fourni avec ladite mise à niveau de licence réservée, pour autoriser l'utilisation par ledit équipement de communication utilisateur (2j) de chaque application avec une mise à niveau de licence réservée associée avec ledit identifiant fourni.

8. Dispositif selon l'une des revendications 6 et 7, lequel il est agencé pour autoriser l'utilisation de toute application par ledit équipement de communication utilisateur (2j) lorsque ledit équipement de communication utilisateur (2j) se déconnecte dudit réseau privé (1).

9. Système comprenant un dispositif selon l'une quelconque des revendications 6 à 8 et un serveur de licences auxiliaire (5) pour ledit réseau privé (1), ledit serveur de licences auxiliaire (5) étant agencé :
- lorsqu'un équipement de communication utilisateur (2j) a établi une connexion avec ledit réseau privé (1), et a fourni un identifiant et a demandé une mise à niveau de licence pour au moins une application indiquée, pour organiser, lorsque cela est possible, la réservation d'une mise à niveau de licence pour chaque application indiquée avec ledit serveur de licences (3) et pour associer ledit identifiant fourni avec chaque mise à niveau de licence réservée,
- puis pour indiquer audit équipement de communication utilisateur (2j) chaque application indiquée pour laquelle une mise à niveau de licence réservée a été associée audit identifiant fourni, afin qu'il soit autorisé à l'utiliser.

10. Système selon la revendication 9, dans lequel le serveur de licences auxiliaire (5) est agencé, lorsqu'il est informé de l'indisponibilité d'une mise à niveau de licence pour une application indiquée par ledit serveur de licences (3), pour indiquer audit équipement de communication utilisateur (2j) que l'utilisation de ladite application indiquée n'est pas autorisée dans ledit réseau privé (1).

11. Système selon l'une des revendications 9 et 10, dans lequel le serveur de licences auxiliaire (5) est en outre agencé, lorsque ledit équipement de communication d'utilisateur (2j) se déconnecte dudit réseau privé (1), pour indiquer audit serveur de licences (3) que chaque mise à niveau de licence associée à un identifiant n'est plus utilisée.
